# FASCICULE DE BREVET EUROPEEN

(11) **EP 3 816 043 B1**
(45) Date de publication et mention de la délivrance du brevet: **31.08.2022**
(21) Numéro de dépôt: 20197136.3
(22) Date de dépôt: 21.09.2020
(51) Int. Cl.: B64C 27/14, B64C 27/00, F16H 57/00, F16D 9/10, F16D 1/10, B64D 35/00, F16H 35/10

(54) **SYSTEME DE TRANSMISSION DE COUPLE AVEC LIAISION NOMINAL ET LIAISON DE SECOURS ENTRE UN ARBRE MENANT ET UN ARBRE MENE ET VEHICULE**
DREHMOMENTÜBERTRAGUNGSSYSTEM MIT NORMALVERBINDUNG UND NOTVERBINDUNG ZWISCHEN EINER ANTRIEBSWELLE UND EINER ANGETRIEBENEN WELLE, UND FAHRZEUG
SYSTEM FOR TRANSMITTING TORQUE WITH NOMINAL AND EMERGENCY CONNECTION BETWEEN A DRIVING SHAFT AND A DRIVEN SHAFT AND VEHICLE

(30) Priorité: 30.10.2019 FR 1912204
(43) Date de publication de la demande: 05.05.2021
(73) Titulaire: Airbus Helicopters, 13725 Marignane Cedex (FR)
(72) Inventeur: GOUJET, Damien, 13960 SAUSSET LES PINS (FR)
(74) Mandataire: GPI Brevets

(56) Documents cités:
- EP-A1- 0 913 600
- WO-A1-2011/132706
- DE-T2- 69 106 215
- US-B1- 6 428 443
- US-B2- 7 507 180

## Description

La présente invention concerne un système de transmission de couple à multiples chemins de passage entre un arbre menant et un arbre mené et un véhicule comprenant un tel système. Le véhicule peut être un aéronef et éventuellement un giravion.

Par exemple, un giravion peut comporter une boîte de transmission de puissance pour mettre en rotation un rotor de sustentation à l'aide d'au moins un moteur. La boîte de transmission de puissance est munie d'un système permettant de transférer un mouvement entre un organe menant rotatif et un organe mené rotatif.

Selon un exemple, une boîte de transmission de puissance possède au moins un pignon d'entrée, chaque pignon d'entrée étant relié par une chaîne cinématique mécanique à au moins un moteur. De plus, la boîte de transmission de puissance comporte un étage de réduction de vitesse de rotation. Dès lors, la boîte de transmission de puissance comporte un système de transmission de couple entre chaque pignon d'entrée et l'étage de réduction de vitesse de rotation. Un tel système de transmission de couple est parfois dénommé plus simplement « système de transmission » par la suite.

Ce système de transmission comporte une roue dénommée parfois « grande roue » ou « roue de conjugaison » mobile en rotation autour d'un axe de rotation. Chaque pignon d'entrée engrène alors la grande roue pour la mettre en rotation autour de l'axe de rotation. Cette grande roue est solidaire d'un arbre menant. L'arbre menant s'étend selon un axe de rotation d'un tronçon de guidage inférieur jusqu'à un tronçon de guidage supérieur en passant par un tronçon intermédiaire portant la grande roue. Dès lors, la grande roue est agencée en élévation selon l'axe de rotation sur le tronçon intermédiaire.

Pour guider l'arbre menant, la boîte de transmission de puissance peut comporter par exemple un palier supérieur agencé radialement au regard de l'axe de rotation entre le tronçon de guidage supérieur et un support. La boîte de transmission de puissance peut aussi comporter un palier inférieur agencé radialement au regard de l'axe de rotation entre le tronçon de guidage inférieur et un support. Par exemple, le palier inférieur et/ou le palier supérieur comportent chacun un roulement à billes ou à rouleaux.

En outre, un arbre mené s'étend partiellement dans l'arbre menant. L'arbre menant est alors muni d'une liaison mécanique ayant des cannelures qui engrènent des cannelures complémentaires de l'arbre mené pour qu'une rotation de la grande roue autour de l'axe de rotation induise une rotation de l'arbre mené autour de cet axe de rotation. Les cannelures sont agencées en élévation entre le tronçon de guidage inférieur et la grande roue.

Par ailleurs, l'arbre mené est solidaire en rotation d'une roue dénommée usuellement « roue planétaire » ou « roue solaire » de l'étage de réduction de vitesse de rotation. De plus, l'étage de réduction de vitesse de rotation comporte des roues-satellites solidaires d'un porte-satellites et une couronne externe. Chaque roue satellite inclut ainsi des dents qui engrènent des dents de la couronne externe et de la roue planétaire. Le porte-satellites est enfin solidarisé en rotation à un mât rotor.

Une rotation d'un pignon d'entrée entraîne alors la rotation conjointe autour de l'axe de rotation de la grande roue, de l'arbre menant, de l'arbre mené, de la roue planétaire, des roues-satellites et du porte-satellites.

Un tel système de transmission de couple s'avère satisfaisant. Néanmoins, une rupture accidentel d'un palier ou d'un des tronçons de l'arbre menant coopérant avec un palier peut induire un désaxage de l'arbre menant au regard de l'axe de rotation et un blocage du système.

Les documents WO 2011/132706 A1, DE 691 06 215 T2, US 6 428 443 B1, EP 0 913 000 A1 et US 7 507 180 B2 sont connus. En particulier, le document WO 2011/132706 décrit un système ayant un arbre menant et un arbre mené liés par des cannelures et une vis, selon la préambule de la revendication 1.

La présente invention a alors pour objet de proposer un système de transmission de couple alternatif visant à limiter les risques de blocage par décalage de l'arbre menant au regard de l'axe de rotation suite à diverses ruptures.

L'invention vise ainsi un système de transmission de couple comprenant un arbre menant et un arbre mené , ledit arbre menant étant creux et mobile en rotation autour d'un axe de rotation, ledit arbre menant s'étendant longitudinalement selon l'axe de rotation de bas en haut selon un sens en élévation d'un tronçon inférieur jusqu'à un tronçon supérieur en passant par un tronçon intermédiaire, ledit arbre mené comprenant longitudinalement un premier tronçon prolongé par un deuxième tronçon, ledit premier tronçon étant agencé au sein de l'arbre menant, ledit deuxième tronçon étant agencé en dehors de l'arbre menant, ledit système de transmission comportant un palier supérieur coopérant avec le tronçon supérieur et un palier inférieur coopérant avec le tronçon inférieur.

Ce système de transmission comporte :
- une liaison nominale à cannelures comprenant des cannelures principales présentes sur le tronçon intermédiaire qui engrènent des cannelures principales présentes sur le premier tronçon dans un mode de fonctionnement nominal sans panne,
- une liaison de secours à cannelures entre l'arbre menant et l'arbre mené, la liaison de secours à cannelures étant agencée selon ledit sens en élévation au dessus de la liaison nominale au regard de l'axe de rotation, la liaison de secours étant inactive dans le mode de fonctionnement nominal,
- un dispositif de guidage radial de secours entre l'arbre menant et l'arbre mené agencée selon ledit sens en élévation au dessous de la liaison nominale au regard de l'axe de rotation, le dispositif de guidage radial de secours étant inactif dans le mode de fonctionnement nominal.

Les termes « bas » et « haut », « dessus » et « dessous » sont des termes relatifs à considérer selon un sens de l'axe de rotation dénommé « sens en élévation ». Ce sens va du tronçon inférieur vers le tronçon supérieur. Un élément « haut » est situé dans un plan orthogonal à l'axe de rotation qui est au dessus d'un plan orthogonal à l'axe de rotation passant par un élément « bas » selon le dit sens. Ce sens peut par exemple être opposé sensiblement à la pesanteur lorsque le système est agencé sur un aéronef posé sur un sol plat.

Les termes « inactif » et « inactive » signifie que l'organe concerné est sans action, conformément à la définition usuelle donnée à ces termes.

Dès lors, dans un mode de fonctionnement nominal l'arbre menant est en appui contre le palier inférieur et le palier supérieur. L'arbre menant transmet un couple à l'arbre mené par la liaison nominale à cannelures. La liaison de secours à cannelures et le dispositif de guidage radial de secours sont inactifs et donc inopérants pour ne pas créer de multiples points de passage en couple durant le mode de fonctionnement nominal. Cette caractéristique peut permettre de maitriser les charges, d'éviter les hyper statismes et/ou de ne pas dégrader la liaison de secours à cannelures et le dispositif de guidage radial de secours afin de les garder intact en cas de besoin. Notamment, le dispositif de guidage radial de secours n'exerce aucun effort sur l'arbre menant et l'arbre mené durant le mode de fonctionnement nominal.

Dans un mode de fonctionnement dégradé, en cas de rupture d'une portion de l'arbre menant, la liaison de secours à cannelures et/ou le dispositif de guidage radial de secours deviennent alors fonctionnels.

Par exemple, si l'arbre menant rompt entre la liaison nominale à cannelures et la liaison de secours à cannelures, l'arbre menant peut transmettre un couple à l'arbre mené non plus par la liaison nominale à cannelures mais par la liaison de secours à cannelures.

Selon un autre exemple, si le tronçon inférieur rompt, l'arbre menant peut rester guidé radialement par le dispositif de guidage radial de secours.

Dès lors, le système de transmission de couple peut rester fonctionnel en transmettant un couple de l'arbre menant vers l'arbre mené soit par la liaison de secours à cannelures soit par la liaison nominale à cannelures en fonction de la situation. De plus, le dispositif de guidage radial de secours peut devenir opérant dans certaines situations accidentelles.

Le système de transmission de couple présente ainsi de multiples chemins de transmission de couple et de multiples organes de guidage pour optimiser son fonctionnement.

Le système de transmission de couple peut comporter une ou plusieurs des caractéristiques qui suivant, comme définis dans les revendications dépendantes.

Ainsi, le tronçon intermédiaire peut comporter une roue dentée. L'arbre menant peut ainsi être mis en rotation via sa roue dentée. Un pignon d'entrée peut par exemple engrener la roue dentée pour mettre en mouvement le système de transmission de couple.

Selon un aspect, la liaison de secours peut être agencée longitudinalement entre la roue dentée et le tronçon supérieur.

La liaison de secours permet ainsi de transmettre un couple d'une partie de l'arbre menant entraînée par la roue vers l'arbre mené même en cas de rupture du tronçon comprenant la liaison nominale.

Selon un aspect, le tronçon intermédiaire peut comporter un tronçon de liaison supérieur et un tronçon de liaison inférieur, ledit tronçon de liaison supérieur étant solidaire du tronçon de liaison inférieur et du tronçon supérieur, ledit tronçon de liaison inférieur étant solidaire du tronçon inférieur, ladite liaison de secours coopérant avec ledit tronçon de liaison supérieur.

En cas de rupture du tronçon intermédiaire entre le tronçon de liaison supérieur et le tronçon de liaison inférieur la liaison de secours devient opérante pour transmettre un couple à l'arbre mené.

Selon un aspect, le tronçon de liaison supérieur et le tronçon supérieur peuvent former une première pièce unitaire, ledit tronçon de liaison inférieur et ledit tronçon inférieur peuvent former une deuxième pièce unitaire, ledit tronçon de liaison supérieur étant fixé par une fixation mécanique au tronçon de liaison inférieur.

L'expression « pièce unitaire » désigne une pièce mécanique d'un seul tenant.

Par exemple, la première pièce est soudée à la deuxième pièce pour former un arbre menant monobloc comprenant éventuellement la roue précitée. En cas de rupture de la soudure, la liaison de secours devient fonctionnelle pour transmettre un couple à l'arbre mené.

Selon un aspect, la liaison de secours peut comporter des premières cannelures de secours solidaires de l'arbre menant ou de l'arbre mené, la liaison de secours pouvant comporter des deuxièmes cannelures de secours solidaires de l'arbre menant ou de l'arbre mené dépourvu des premières cannelures de secours, un jeu circonférentiel séparant les premières cannelures de secours et les deuxièmes cannelures de secours dans le mode de fonctionnement nominal.

Ce jeu circonférentiel représente donc un espace qui permet d'éviter un contact entre les premières cannelures de secours et les deuxièmes cannelures de secours durant le mode de fonctionnement nominal.

Le jeu circonférentiel peut être dimensionné pour être inférieur à un seuil haut afin de garantir le fonctionnement de la liaison de secours pendant un temps donné durant un mode de fonctionnement dégradé et supérieur à un seuil bas pour engendrer des désalignements acceptables durant le mode de fonctionnement dégradé. Le seuil bas est inférieur au seuil haut. En effet, un tel désalignement est générateur de dégradations détectables, tels que par exemple des vibrations pouvant être mesurées par des méthodes usuelles et/ou la génération de limailles pouvant être repérées par un détecteur de limailles. Dès lors, la liaison de secours permet au système de fonctionner dans un mode dégradé tout en autorisant un léger désalignement permettant de détecter la survenue du mode dégradé.

A cet effet, les premières cannelures de secours ont par exemple une épaisseur de dents inférieure à une épaisseur de dents des deuxièmes cannelures de secours.

Chaque cannelure de secours s'étend circonférentiellement entre deux flancs et radialement d'une base vers un sommet, éventuellement sensiblement plat voire incurvé. Conformément à la convention relative aux dentures l'expression « épaisseur de dents » désigne alors la plus petite distance séparant deux flancs de la cannelure de secours au niveau de son sommet par exemple.

Les deuxièmes cannelures de secours ont une plus petite épaisseur de dents que les premières cannelures de secours pour éviter un contact entre elles et une transmission de couple lors du mode de fonctionnement nominal.

Eventuellement, chaque cannelure de secours peut être une cannelure à flancs rectilignes.

Selon un aspect, les premières cannelures de secours peuvent être solidaires de l'arbre menant, lesdites deuxièmes cannelures de secours étant solidaires de l'arbre mené.

Selon un aspect, deux dites premières cannelures de secours adjacentes pouvant être liées par un premier fond et deux dites deuxièmes cannelures de secours adjacentes pouvant être liées par un second fond, dans le mode de fonctionnement nominal il est possible qu'aucune première cannelure de secours ne touche une deuxième cannelure de secours et un second fond et qu'aucune deuxième cannelure de secours ne touche un premier fond.

Selon un aspect, deux dites premières cannelures de secours adjacentes pouvant être liées par un premier fond et deux dites deuxièmes cannelures de secours adjacentes pouvant être liées par un second fond, dans le mode de fonctionnement nominal : un dit jeu circonférentiel peut séparer chaque flanc de chaque première cannelure de secours et une deuxième cannelure de secours adjacente, un premier espace radial sépare chaque deuxième cannelure de secours de chaque premier fond et un deuxième espace radial sépare chaque première cannelure de secours de chaque second fond.

L'arbre menant et l'arbre mené ne sont donc pas en contact au niveau de la liaison de secours durant le mode de fonctionnement nominal. Par contre, dans un mode de fonctionnement dégradé les premières cannelures de secours peuvent entraîner en rotation les deuxièmes cannelures de secours par interférence de forme.

Selon un aspect, lesdites cannelures principales peuvent comporter des cannelures à flancs rectilignes.

Selon un aspect, le dispositif de guidage radial de secours peut assurer un maintien en position radialement uniquement, le système de transmission de couple ayant déjà deux chemins de transmission d'un couple.

Selon un aspect, le dispositif de guidage radial de secours peut comporter un anneau de l'arbre mené et au moins une face d'appui de l'arbre menant, ladite au moins une face d'appui étant séparée de l'anneau dans le mode de fonctionnement nominal.

Selon une première variante, le dispositif de guidage radial de secours peut comporter une unique face d'appui annulaire.

Selon une deuxième variante, le dispositif de guidage radial de secours comporte de multiples cannelures de guidage qui s'étendent radialement d'une base vers un sommet, chaque sommet formant une face d'appui. Les cannelures de guidage n'ont pas vocation à transmettre un couple. Les cannelures de guidage peuvent être dans le prolongement des cannelures nominales pour faciliter la fabrication de l'arbre menant.

Selon un aspect, le système de transmission de couple peut comporter un bloqueur bloquant longitudinalement l'arbre menant par rapport à l'arbre mené à l'arrêt, par exemple sensiblement au niveau de la liaison nominale à cannelures.

Un tel bloqueur peut tendre à lier axialement l'arbre menant et l'arbre mené à l'arrêt.

Par ailleurs, une boîte de transmission de puissance peut comporter un système de transmission de couple selon l'invention.

Par exemple, l'arbre mené est solidaire d'une roue planétaire d'un étage de réduction de vitesse de rotation épicycloïdal.

Par ailleurs, un véhicule peut comporter un système de transmission de couple selon l'invention, éventuellement au sein d'une boîte de transmission de puissance.

L'invention et ses avantages apparaîtront avec plus de détails dans le cadre de la description qui suit avec des exemples donnés à titre illustratif en référence aux figures annexées qui représentent :
[Fig 1] la figure 1, une vue d'un système de transmission de couple selon l'invention,
[Fig 2] la figure 2, une vue d'un aéronef ayant un système de transmission de couple selon l'invention,
[Fig 3] la figure 3, une vue d'un système de transmission de couple selon l'invention dans un mode de fonctionnement nominal,
[Fig 4] la figure 4, une vue partielle d'une liaison de secours dans un mode de fonctionnement nominal,
[Fig 5] la figure 5, une vue d'un système de transmission de couple selon l'invention dans un mode de fonctionnement dégradé en présence d'une rupture au niveau d'un tronçon supérieur de l'arbre menant,
[Fig 6] la figure 6, une vue d'un système de transmission de couple selon l'invention dans un mode de fonctionnement dégradé en présence d'une rupture de l'arbre menant au dessus d'une liaison nominale, et
[Fig 7] la figure 7, une vue d'un système de transmission de couple selon l'invention dans un mode de fonctionnement dégradé en présence d'une rupture de l'arbre menant en dessous d'une liaison nominale.

Les éléments présents dans plusieurs figures distinctes sont affectés d'une seule et même référence.

Trois directions X, Y et Z orthogonales les unes par rapport aux autres sont représentées sur certaines figures.

La troisième direction Z est dite longitudinale. Le terme « longitudinal » et le terme « axial » ou encore l'expression « en élévation » sont relatifs à toute direction parallèle à la première direction X.

La deuxième direction Y et la première direction X sont dites radiales en élévation. Le terme « radial » est relatif à toute direction orthogonale à la première direction X.

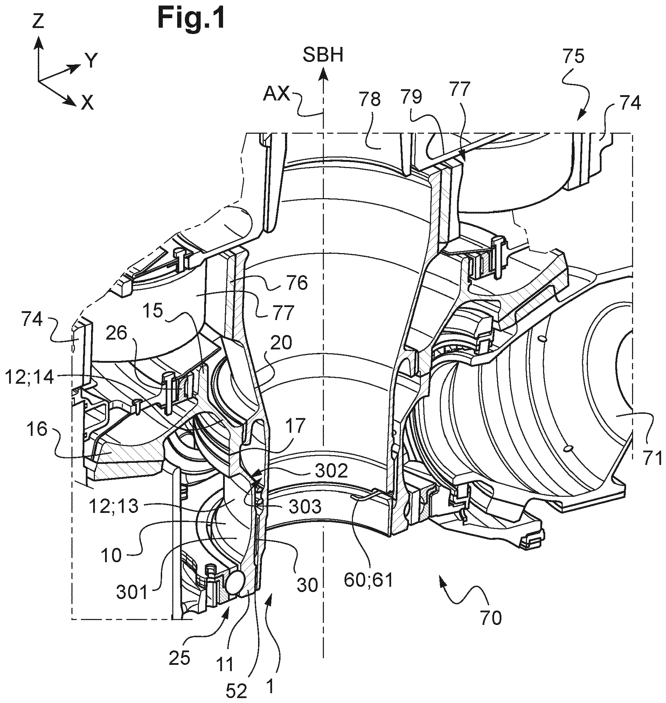

La figure 1 présente un système 1 de transmission de couple à multiples chemins de passage selon l'invention.

Ce système 1 de transmission comporte un arbre menant 10 et un arbre mené 20 qui sont mobiles tous deux en rotation autour d'un axe de rotation AX dans des conditions normales. L'arbre menant 10 est relié à l'arbre mené 20 par de multiples liaisons.

Selon la figure 1, le système 1 de transmission peut être agencé au sein d'une boîte de transmission de puissance 70. Par exemple, le système 1 de transmission a pour fonction de transmettre un mouvement d'au moins un pignon d'entrée 71 vers un étage de réduction de vitesse 75 épicycloïdal. Par exemple, chaque pignon d'entrée 71 engrène une roue 16 de conjugaison de l'arbre menant 10. Dès lors, selon l'exemple illustré l'arbre mené 20 est solidaire d'une roue planétaire 76 de l'étage de réduction de vitesse 75 épicycloïdal. La roue planétaire 76 peut être fixée à l'arbre mené 20 ou lui être intégrée. Par suite, l'étage de réduction de vitesse 75 épicycloïdal comporte des roues-satellites 77 qui sont en prises sur la roue planétaire 76 et une couronne dentée 74, chaque roue-satellite 77 étant disposée radialement entre la roue planétaire 76 et la couronne dentée 74. Les roues-satellites 77 sont portées par un porte-satellites 79 solidaire d'un mât rotor 78.

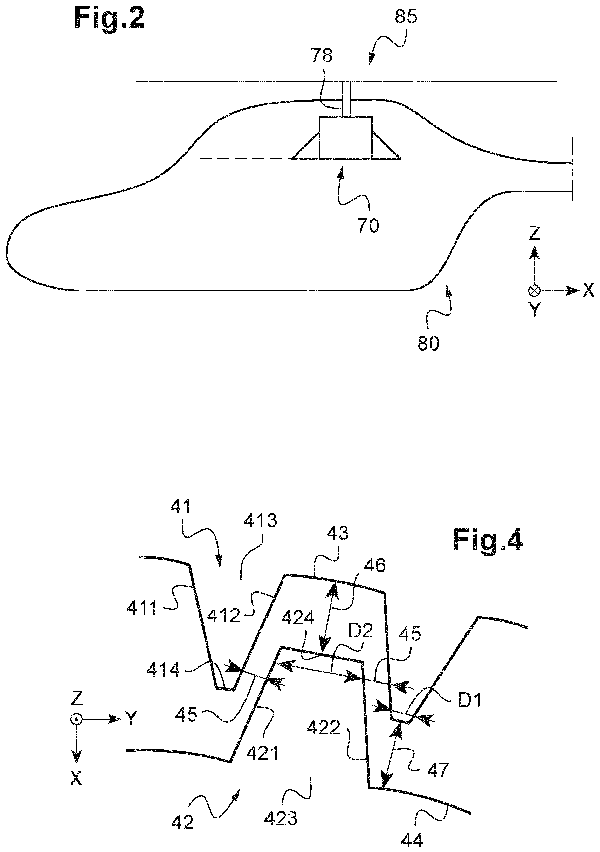

Selon la figure 2, le système 1 de transmission peut être agencé au sein d'un véhicule 80. Par exemple, le véhicule 80 est un aéronef muni d'un rotor 85 qui participe à sa sustentation et/ou à sa propulsion. Par exemple, le système 1 de transmission peut être agencé dans une boîte de transmission de puissance 70 qui entraîne le rotor 85 avec son mât rotor 78.

En référence à nouveau à la figure 1 et indépendamment de l'agencement du système 1 de transmission, l'arbre menant 10 est creux en son centre. Cet arbre menant 10 peut présenter une symétrie de révolution autour de l'axe de rotation AX. L'arbre menant 10 s'étend alors radialement autour de l'axe de rotation AX et longitudinalement selon l'axe de rotation AX.

L'arbre menant 10 est guidé en rotation par un palier inférieur 25 et un palier supérieur 26 qui entourent cet arbre menant 10. Les termes « inférieur » et « supérieur » sont des termes relatifs à considérer au regard d'un sens en élévation SBH de l'axe de rotation AX. Selon l'exemple illustré, le palier inférieur 25 comporte un roulement à billes agencé entre une face extérieure 301 de l'arbre menant 10 et un support alors que le palier supérieur 26 comporte un roulement à rouleaux agencé entre cette face extérieure 301 de l'arbre menant 10 et un support. Une telle face extérieure 301 est dénommée par commodité « face extérieure menante 301 » pour être facilement identifiée.

Selon un autre aspect, l'arbre menant 10 comporte longitudinalement selon l'axe de rotation AX un tronçon inférieur 11 prolongé par un tronçon intermédiaire 12, ce tronçon intermédiaire 12 étant lui-même prolongé par un tronçon supérieur 15. De bas en haut selon le sens en élévation SBH de l'axe de rotation AX, l'arbre menant 10 possède donc successivement le tronçon inférieur 11, le tronçon intermédiaire 12 puis le tronçon supérieur 15. Les termes « bas » et « haut » sont des termes relatifs à considérer au regard du sens en élévation SBH, un élément situé en « haut » étant situé au dessus d'un élément dit en « bas » selon ce sens en élévation. Le tronçon inférieur 11 représente un tronçon de l'arbre menant 10 en appui radialement contre le palier inférieur 25 alors que le tronçon supérieur 15 représente un tronçon de l'arbre menant 10 en appui radialement contre le palier supérieur 26. Le tronçon supérieur peut de plus présenter un épaulement formant une butée axiale 800 empêchant une translation de l'arbre menant de bas en haut par contact avec le palier supérieur 26.

Eventuellement, l'arbre menant 10 peut comprendre une unique pièce ou plusieurs pièces solidarisées les unes aux autres éventuellement de manière irréversible hors rupture accidentelle.

Par exemple, le tronçon inférieur 11, le tronçon intermédiaire 12 puis le tronçon supérieur 15 peuvent comprendre respectivement trois pièces soudées les unes aux autres, le tronçon intermédiaire 12 étant soudé au tronçon inférieur 11 et au tronçon supérieur 15.

Selon un autre exemple, le tronçon intermédiaire 12 comporte un tronçon de liaison supérieur 14 et un tronçon de liaison inférieur 13. Dès lors, le tronçon de liaison supérieur 14 est solidaire du tronçon de liaison inférieur 13 et du tronçon supérieur 15 alors que le tronçon de liaison inférieur 13 est lui solidaire du tronçon inférieur 11 et de fait du tronçon de liaison supérieur 14. Ainsi, l'arbre menant 10 comporte de bas en haut le tronçon inférieur 11, le tronçon de liaison inférieur 13, le tronçon de liaison supérieur 14 puis le tronçon supérieur 15.

Eventuellement, le tronçon inférieur 11 et le tronçon de liaison inférieur 13 sont deux tronçons d'une même première pièce unitaire alors que le tronçon de liaison supérieur 14 et le tronçon supérieur 15 sont deux tronçons d'une même deuxième pièce unitaire. Le tronçon de liaison inférieur 13 est alors solidarisé au tronçon de liaison supérieur 14 par une fixation mécanique 17 telle que par exemple une soudure.

Selon un autre aspect, l'arbre menant 10 peut comporter une roue 16 dentée. Par exemple, le tronçon intermédiaire 12 comporte cette roue 16 dentée, éventuellement agencée juste au niveau de l'interface avec le tronçon supérieur 15. Selon un autre exemple, le tronçon intermédiaire 12 est solidarisé à la roue 16 dentée par des moyens usuels. La roue 16 dentée peut comprendre des dents sensiblement présentes dans un plan orthogonal à l'axe de rotation AX.

Selon un autre aspect, l'arbre mené 20 peut être creux en son centre et/ou peut présenter une symétrie de révolution autour de l'axe de rotation AX. L'arbre mené 20 comporte longitudinalement de bas en haut un premier tronçon 21 prolongé par un deuxième tronçon 22 le long de l'axe de rotation AX. Le premier tronçon 21 est agencé au sein de l'arbre menant 10 alors que le deuxième tronçon 22 est en saillie longitudinalement du tronçon supérieur 15 de l'arbre menant 10. Dès lors, le premier tronçon 21 comporte une face extérieure menée 303 en regard radialement d'une face interne menante 302 de l'arbre menant 10.

Par ailleurs le système 1 de transmission comporte trois sous-systèmes de transmission de couple et/ou de maintien/guidage entre l'arbre menant 10 et l'arbre mené 20, chaque sous-système étant éventuellement qualifié de « liaison ».

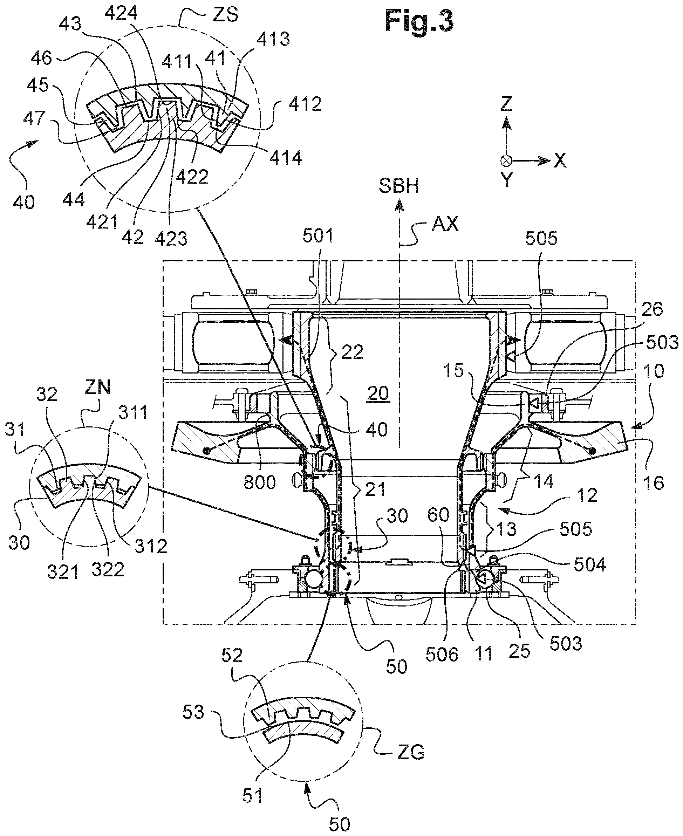

En référence à la figure 3, le système 1 de transmission comporte une première liaison à cannelures dite « liaison nominale 30 ». Cette liaison nominale 30 comprend ainsi des premières cannelures principales 31 qui engrènent des deuxièmes cannelures principales 32 dans un mode de fonctionnement nominal, à savoir dans un mode de fonctionnement sans panne.

Les premières cannelures principales 31 sont solidaires de l'arbre menant 10 et notamment du tronçon intermédiaire 12. Ces premières cannelures principales 31 peuvent être disposées sur un anneau solidarisé à l'arbre menant 10 ou peuvent être une partie intégrante de l'arbre menant 10. En particulier, les premières cannelures principales 31 peuvent être localisées le cas échéant sur le tronçon de liaison inférieur 13. Les premières cannelures principales 31 peuvent comporter des cannelures à flancs rectilignes et/ou peuvent être des cannelures droites qui s'étendent parallèlement à l'axe de rotation AX. Chaque première cannelure principale 31 s'étend circonférentiellement entre deux flancs et radialement jusqu'à un sommet.

Les deuxièmes cannelures principales 32 sont solidaires de l'arbre mené 20 et notamment du premier tronçon 21. Ces deuxièmes cannelures principales 32 peuvent être disposées sur un anneau solidarisé à l'arbre mené 20 ou peuvent être une partie intégrante de l'arbre mené 20. Les deuxièmes cannelures principales 32 peuvent comporter des cannelures à flancs rectilignes et/ou peuvent être des cannelures droites qui s'étendent parallèlement à l'axe de rotation AX. Chaque deuxième cannelure principale 32 s'étend circonférentiellement entre deux flancs et radialement jusqu'à un sommet.

Les premières cannelures principales 31 et les deuxièmes cannelures principales 32 peuvent être complémentaires voire identiques. Dans le mode de fonctionnement nominal, au moins un voire chaque flanc de chaque première cannelure principale 31 est circonférentiellement en contact contre un flanc d'une deuxième cannelure principale 32.

De plus, les premières cannelures principales sont radialement en contact avec les deuxièmes cannelures principales.

Par exemple, le sommet de chaque première cannelure principale 31 est selon l'exemple représenté radialement en contact contre une paroi reliant deux deuxièmes cannelures principales 32 adjacentes et le sommet de chaque deuxième cannelure principale 32 est en contact radialement contre une paroi reliant deux premières cannelures principales 31 adjacentes. Selon un autre exemple, un centrage sur flanc est envisageable, les premières cannelures principales 31 étant radialement en contact contre les deuxièmes cannelures principales 32 via les flancs de ces cannelures uniquement.

Par ailleurs, en référence à la figure 3, le système 1 de transmission comporte une deuxième liaison à cannelures dite « liaison de secours 40 » pour notamment être distinguée de la liaison nominale 30. L'expression « de secours » est employée pour qualifier la deuxième liaison car la liaison de secours 40 est inactive dans le mode de fonctionnement nominal. Donc en l'absence de panne, aucun couple n'est transmis via la liaison de secours 40 entre l'arbre menant 10 et l'arbre mené 20.

La liaison de secours 40 est une liaison à cannelures à l'instar de la liaison nominale 30 afin de pouvoir transmettre un couple si nécessaire entre l'arbre menant 10 et l'arbre mené 20.

La liaison de secours 40 est agencée selon le sens en élévation SBH au dessus de la liaison nominale 30. Par exemple, la liaison de secours 40 est le cas échéant agencée longitudinalement selon le sens en élévation SBH entre la liaison nominale 30 et la roue 16 dentée ou le tronçon supérieur 15, voire par exemple au niveau du tronçon de liaison supérieur 14 le cas échéant.

Cette liaison de secours 40 comprend ainsi des premières cannelures de secours 41 qui sont susceptibles d'engrener des deuxièmes cannelures de secours 42 dans un mode de fonctionnement dégradé.

Selon l'exemple représenté, les premières cannelures de secours 41 sont solidaires de l'arbre menant 10 et les deuxièmes cannelures de secours 42 sont solidaires de l'arbre mené 20. L'inverse est possible.

Selon l'exemple représenté, ces premières cannelures de secours 41 sont une partie intégrante de l'arbre menant 10 mais peuvent être disposées sur un anneau solidarisé à l'arbre menant 10. En particulier, les premières cannelures de secours 41 peuvent être localisées le cas échéant sur le tronçon de liaison supérieur 14. Par exemple, les premières cannelures de secours 41 sont agencées sur un épaulement de l'arbre menant 10. Les premières cannelures de secours 41 peuvent comporter des cannelures à flancs rectilignes et/ou peuvent être des cannelures droites qui s'étendent parallèlement à l'axe de rotation AX.

De plus, les deuxièmes cannelures de secours 42 sont une partie intégrante de l'arbre mené 20 mais peuvent être disposées sur un anneau solidarisé à l'arbre mené 20. Par exemple, les deuxièmes cannelures de secours 42 sont agencées sur un épaulement de l'arbre mené 20. Les deuxièmes cannelures de secours 42 peuvent comporter des cannelures à flancs rectilignes et/ou peuvent être des cannelures droites qui s'étendent parallèlement à l'axe de rotation AX.

Selon un autre aspect, les premières cannelures de secours 41 et les deuxièmes cannelures de secours 42 peuvent être différentes.

En référence à la figure 4 deux premières cannelures de secours 41 adjacentes sont liées par un premier fond 43. Ce premier fond 43 est par exemple une paroi de l'arbre menant 10. De plus chaque première cannelure de secours 41 s'étend au regard de l'axe de rotation AX circonférentiellement entre deux premiers flancs 411, 412 et radialement d'une première base 413 vers un premier sommet 414.

De même, deux deuxièmes cannelures de secours 42 adjacentes sont liées par un second fond 44. Ce second fond 44 est par exemple une paroi de l'arbre mené 20. De plus, chaque deuxième cannelure de secours 42 s'étend circonférentiellement entre deux deuxièmes flancs 421, 422 et radialement d'une deuxième base 423 vers un deuxième sommet 424.

Dès lors, dans le mode de fonctionnement nominal, aucune première cannelure de secours 41 ne touche une deuxième cannelure de secours 42 et un second fond 44. De plus, aucune deuxième cannelure de secours 42 ne touche un premier fond 43.

Dans un mode de fonctionnement dégradé, les cannelures de secours présentent un contact radial.

Par exemple un premier sommet 414 peut être en appui contre un second fond 44 et un deuxième sommet 424 peut être en appui contre un premier fond 43 pour assurer un guidage et/ou un premier flanc 412 peut s'appuyer sur un deuxième flanc 421 pour transmettre un couple.

Selon un autre exemple, un centrage sur flanc est réalisé.

Selon l'exemple de la figure 4, durant le mode de fonctionnement nominal, un jeu circonférentiel 45 sépare chaque premier flanc 411, 412 de chaque première cannelure de secours 41 d'un deuxième flanc d'une deuxième cannelure de secours 42 adjacente à cette première cannelure de secours 41.

A cet effet, les premières cannelures de secours 41 peuvent avoir une plus petite épaisseur de dents que les deuxièmes cannelures de secours 42. Par exemple, la première distance D1 séparant deux premiers flancs 411, 412 au niveau d'un premier sommet est inférieure à la deuxième distance D2 séparant deux deuxièmes flancs 421, 422 au niveau d'un deuxième sommet 424. Selon un autre exemple, la première distance D1 peut être égale à la deuxième distance D2

Selon un aspect, un premier espace radial 46 peut séparer chaque deuxième cannelure de secours 42 de chaque premier fond 43 et un deuxième espace radial 47 sépare chaque première cannelure de secours 41 de chaque second fond 44.

Par ailleurs et en référence à la figure 3, le système 1 de transmission comporte une troisième liaison dite « dispositif de guidage radial de secours 50 ». Le dispositif de guidage radial de secours n'a pas pour fonction de transmettre un couple mais assure un positionnement de l'arbre menant 10 et/ou de l'arbre mené 20 si nécessaire au moins radialement. Le dispositif de guidage radial de secours 50 est inactif dans le mode de fonctionnement nominal.

Le dispositif de guidage radial de secours 50 est agencé selon le sens en élévation SBH en dessous de la liaison nominale 30. Par exemple, le dispositif de guidage radial de secours 50 est le cas échéant agencé au niveau du tronçon inférieur 11.

Selon l'exemple de la figure 3, le dispositif de guidage radial de secours 50 comporte un anneau 51 de l'arbre mené 20 qui coopère si besoin avec au moins une face d'appui 52 de l'arbre menant 10.

Selon un premier exemple, le tronçon inférieur 11 présente des cannelures intérieures en regard de l'axe de rotation AX. Les cannelures intérieures sont éventuellement dans le prolongement des premières cannelures principales 31. Chaque sommet d'une cannelure intérieure forme une face d'appui 52.

Selon un deuxième exemple illustré sur la figure 1, l'arbre menant 10 comporte un anneau comprenant une face d'appui 52 annulaire.

Durant le mode de fonctionnement nominal et en référence à nouveau à la figure 3, chaque face d'appui 52 est séparée de l'anneau 51 par un espace annulaire.

Selon un autre aspect, le système 1 de transmission de couple peut comporter un bloqueur 60 pour solidariser en translation selon l'axe de rotation AX l'arbre menant 10 et l'arbre mené 20.

Selon l'exemple de la figure 1, le bloqueur 60 prend la forme d'une patte 61 en forme de L solidaire de l'arbre menant 10. Cette patte 61 pénètre dans un trou oblong de l'arbre mené 20.

Le bloqueur 60 peut par exemple être positionné entre la liaison nominale 30 et le tronçon inférieur 11.

Les figures 3, 5, 6 et 7 illustrent le fonctionnement du système 1 de transmission selon l'invention. Les figures 3, 5, 6 et 7 présentent des zones agrandies ZS, ZN, ZG pour montrer le fonctionnement des diverses liaisons.

La figure 3 illustre en particulier le mode de fonctionnement nominal. Durant ce mode de fonctionnement nominal, les premières cannelures principales 31 engrènent les deuxièmes cannelures principales 32. A l'inverse, aucune première cannelure de secours 41 ne touche une deuxième cannelure de secours 42 et un second fond 44. De plus, aucune deuxième cannelure de secours 42 ne touche un premier fond 43. De même, l'anneau 51 du dispositif de guidage radial de secours 50 ne touche aucune face d'appui 52.

Par suite, l'arbre menant 10 transmet un couple à l'arbre mené 20 via la liaison nominale 30 selon les pointillés 501, la liaison de secours 40 et le dispositif de guidage radial de secours 50 étant inactifs. L'arbre menant 10 est en outre guidé en rotation autour de l'axe de rotation AX selon les flèches 503 par le palier inférieur 25 et le palier supérieur 26 et longitudinalement selon l'axe de rotation AX par le palier inférieur 25 conformément à la flèche 504. L'arbre mené 20 est lui guidé en rotation autour de l'axe de rotation AX selon les flèches 505 par la liaison nominale 30 et les roues-satellites 77, et longitudinalement selon l'axe de rotation AX par le bloqueur 60 selon la flèche 506.

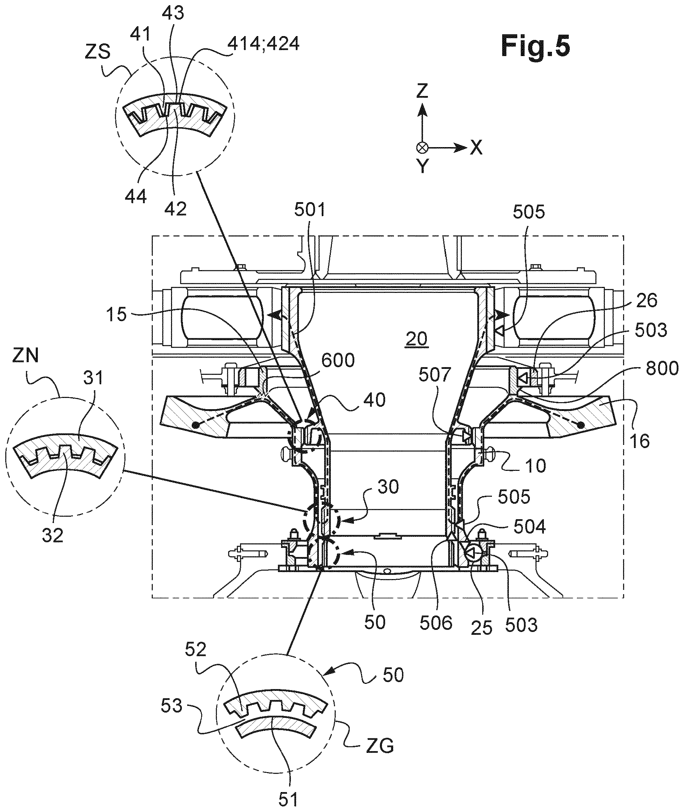

La figure 5 illustre un premier mode de fonctionnement dégradé résultant d'une rupture 600 de l'arbre menant 10 entre le tronçon supérieur 15 et la roue 16. Cette rupture 600 affecte de fait le guidage de l'arbre menant 10 radialement. Durant ce premier mode de fonctionnement dégradé, les premières cannelures principales 31 engrènent toujours les deuxièmes cannelures principales 32. Par contre, la rupture 600 peut engendrer un déplacement de l'arbre menant 10. Dès lors, aucune première cannelure de secours 41 ne touche une deuxième cannelure de secours 42 mais certaines premières cannelures de secours 41 s'appuient contre un second fond 44 ou sur les flancs et certaines deuxièmes cannelures de secours 42 s'appuient contre un premier fond 43 pour apporter un soutien radial. Alternativement, un contact radial via les flancs des premières cannelures de secours 41 et deuxièmes cannelures de secours 42 est réalisé. Le dispositif de guidage radial de secours 50 reste inactif, l'anneau 51 du dispositif de guidage radial de secours 50 ne touchant aucune face d'appui 52.

Par suite, l'arbre menant 10 transmet un couple à l'arbre mené 20 via la liaison nominale 30 selon les pointillés 501. L'arbre menant 10 est en outre guidé en rotation autour de l'axe de rotation AX selon les flèches 503 par le palier inférieur 25 et éventuellement par le palier supérieur 26 ainsi que par la liaison de secours 40 selon la flèche 507. L'arbre menant 10 est guidé longitudinalement selon l'axe de rotation AX par le palier inférieur 25 conformément à la flèche 504. L'arbre mené 20 est lui guidé en rotation autour de l'axe de rotation AX toujours selon les flèches 505 par la liaison nominale 30 et les roues-satellites 77, et longitudinalement selon l'axe de rotation AX par le bloqueur 60 selon la flèche 506.

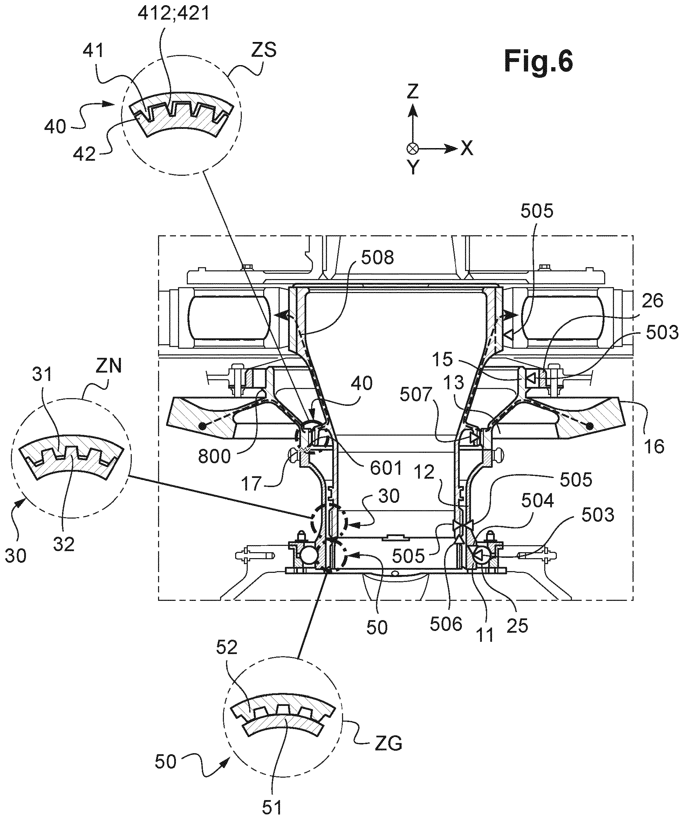

La figure 6 illustre un deuxième mode de fonctionnement dégradé résultant d'une rupture 601 de l'arbre menant 10 entre le tronçon de liaison supérieur 14 et le tronçon de liaison inférieur 13. Cette rupture 601 affecte de fait le guidage de l'arbre menant 10. Durant ce deuxième mode de fonctionnement dégradé, les premières cannelures principales 31 engrènent toujours les deuxièmes cannelures principales 32 mais peuvent ne transmettre aucun couple. Dès lors, les premières cannelures de secours 41 engrènent les deuxièmes cannelures de secours 42. Le dispositif de guidage radial de secours 50 devient actif, l'anneau 51 du dispositif de guidage radial de secours touchant au moins une face d'appui 52 à chaque instant. La liaison nominale peut aussi assurer un guidage radial.

Par suite, l'arbre menant 10 transmet un couple à l'arbre mené 20 via la liaison de secours 40 selon les pointillés 508. L'arbre menant 10 est en outre guidé en rotation autour de l'axe de rotation AX selon les flèches 503 par le palier supérieur 26 et éventuellement par le palier inférieur 25, par la liaison de secours 40 selon la flèche 507 et par le dispositif de guidage radial de secours 50. L'arbre menant 10 est éventuellement guidé longitudinalement selon l'axe de rotation AX par le palier inférieur 25 conformément à la flèche 504. L'arbre mené 20 est lui guidé en rotation autour de l'axe de rotation AX éventuellement selon les flèches 505 par la liaison nominale 30 et les roues-satellites 77 voire par la liaison de secours 40, et longitudinalement selon l'axe de rotation AX par le bloqueur 60 selon la flèche 506.

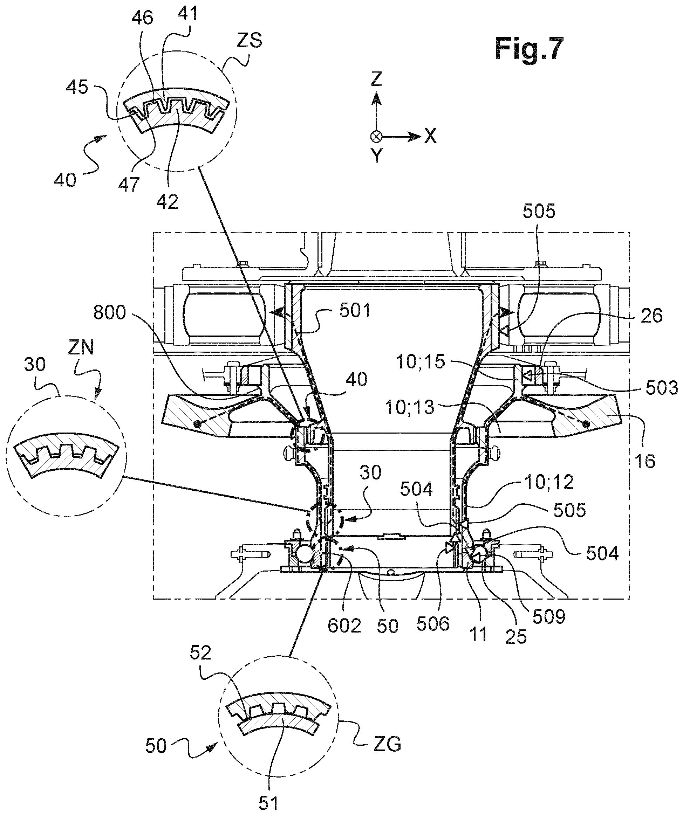

La figure 7 illustre un troisième mode de fonctionnement dégradé résultant d'une rupture 602 de l'arbre menant 10 au niveau du tronçon inférieur. Durant ce troisième mode de fonctionnement dégradé, les premières cannelures principales 31 engrènent toujours les deuxièmes cannelures principales 32. A l'inverse, aucune première cannelure de secours 41 ne touche une deuxième cannelure de secours 42 et un second fond 44. De plus, aucune deuxième cannelure de secours 42 ne touche un premier fond 43. Le dispositif de guidage radial de secours 50 devient actif, l'anneau 51 du dispositif de guidage radial de secours touchant au moins une face d'appui 52 à chaque instant.

Par suite, l'arbre menant 10 transmet un couple à l'arbre mené 20 via la liaison nominale 30 selon les pointillés 501. L'arbre menant 10 est en outre guidé en rotation autour de l'axe de rotation AX selon les flèches 503 par le palier supérieur 26 et éventuellement le palier inférieur 25, par le dispositif de guidage radial de secours 50 selon la flèche 509 et par la liaison nominale 30. L'arbre menant 10 est éventuellement guidé longitudinalement selon l'axe de rotation AX par le bloqueur 60. L'arbre mené 20 est lui guidé en rotation autour de l'axe de rotation AX éventuellement selon les flèches 505 par la liaison nominale 30 et les roues-satellites 77, et longitudinalement selon l'axe de rotation AX par la butée axiale 800.

## Revendications

1. Système (1) de transmission de couple comprenant un arbre menant (10) et un arbre mené (20), ledit arbre menant (10) étant creux et mobile en rotation autour d'un axe de rotation (AX), ledit arbre menant (10) s'étendant longitudinalement selon l'axe de rotation (AX) de bas en haut selon un sens en élévation (SBH) d'un tronçon inférieur (11) jusqu'à un tronçon supérieur (15) en passant par un tronçon intermédiaire (12), ledit arbre mené (20) comprenant longitudinalement un premier tronçon (21) prolongé par un deuxième tronçon (22), ledit premier tronçon (21) étant agencé au sein de l'arbre menant (10), ledit deuxième tronçon (22) étant agencé en dehors de l'arbre menant (10), ledit système (1) de transmission comportant un palier supérieur (26) coopérant avec le tronçon supérieur (15) et un palier inférieur (25) coopérant avec le tronçon inférieur (11), ledit système (1) de transmission comportant une liaison nominale (30) à cannelures comprenant des cannelures principales (31) présentes sur le tronçon intermédiaire (12) qui engrènent des cannelures principales (32) présentes sur le premier tronçon (21) dans un mode de fonctionnement nominal qui est un mode de fonctionnement sans panne, une liaison de secours (40) à cannelures entre l'arbre menant (10) et l'arbre mené (20) et un dispositif de guidage radial de secours (50) entre l'arbre menant (10) et l'arbre mené (20), **caractérisé en ce que** : la liaison de secours (40) à cannelures étant agencée au dessus de la liaison nominale (30) selon ledit sens en élévation au regard de l'axe de rotation (AX), la liaison de secours (40) étant inactive dans le mode de fonctionnement nominal,
- le dispositif de guidage radial de secours (50) entre l'arbre menant (10) et l'arbre mené (20) êtant agencée au dessous de la liaison nominale (30) selon ledit sens en élévation au regard de l'axe de rotation (AX), le dispositif de guidage radial de secours (50) étant inactif dans le mode de fonctionnement nominal.

2. Système de transmission de couple selon la revendication 1,
**caractérisé en ce que** ledit tronçon intermédiaire (12) comporte une roue (16) dentée.

3. Système de transmission de couple selon la revendication 2,
**caractérisé en ce que** ladite liaison de secours (40) est agencée longitudinalement entre la roue (16) dentée et le tronçon supérieur (15).

4. Système de transmission de couple selon l'une quelconque des revendications 1 à 3,
**caractérisé en ce que** ledit tronçon intermédiaire (12) comporte un tronçon de liaison supérieur (14) et un tronçon de liaison inférieur (13), ledit tronçon de liaison supérieur (14) étant solidaire du tronçon de liaison inférieur (13) et du tronçon supérieur (15), ledit tronçon de liaison inférieur (13) étant solidaire du tronçon inférieur (11), ladite liaison de secours (40) coopérant avec ledit tronçon de liaison supérieur (14).

5. Système de transmission de couple selon la revendication 4,
**caractérisé en ce que** ledit tronçon de liaison supérieur (14) et le tronçon supérieur (15) forment une première pièce unitaire, ledit tronçon de liaison inférieur (13) et ledit tronçon inférieur (11) forment une deuxième pièce unitaire, ledit tronçon de liaison supérieur (14) étant fixé par une fixation mécanique (17) au tronçon de liaison inférieur (13).

6. Système de transmission de couple selon l'une quelconque des revendications 1 à 5,
**caractérisé en ce que** ladite liaison de secours (40) comporte des premières cannelures de secours (41) solidaires de l'arbre menant (10) ou de l'arbre mené (20), la liaison de secours (40) comportant des deuxièmes cannelures de secours (42) solidaires de l'arbre menant (10) ou mené (20) dépourvu des premières cannelures de secours (41), un jeu circonférentiel séparant les premières cannelures de secours et les deuxièmes cannelures de secours dans le mode de fonctionnement nominal.

7. Système de transmission de couple selon la revendication 6,
**caractérisé en ce que** les premières cannelures de secours (41) ont une épaisseur de dents inférieure à une épaisseur de dents des deuxièmes cannelures de secours (42), lesdites premières cannelures de secours (41) sont solidaires de l'arbre menant (10), lesdites deuxièmes cannelures de secours (42) étant solidaires de l'arbre mené (20).

8. Système de transmission de couple selon l'une quelconque des revendications 6 à 7,
**caractérisé en ce que** deux dites premières cannelures de secours (41) adjacentes étant liées par un premier fond (43) et deux dites deuxièmes cannelures de secours (42) adjacentes étant liées par un second fond (44), dans le mode de fonctionnement nominal aucune première cannelure de secours (41) ne touche une deuxième cannelure de secours (42) et un second fond (44) et aucune deuxième cannelure de secours (42) ne touche un premier fond (43).

9. Système de transmission de couple selon l'une quelconque des revendications 6 à 8,
**caractérisé en ce que** deux dites premières cannelures de secours (41) adjacentes étant liées par un premier fond (43) et deux dites deuxièmes cannelures de secours (42) adjacentes étant liées par un second fond (44), dans le mode de fonctionnement nominal : un dit jeu circonférentiel (45) sépare un flanc (411, 412) de chaque première cannelure de secours (41) et une deuxième cannelure de secours (42) adjacente, un premier espace radial (46) sépare chaque deuxième cannelure de secours (42) de chaque premier fond (43) et un deuxième espace radial (47) sépare chaque première cannelure de secours (41) de chaque second fond (44).

10. Système de transmission de couple selon l'une quelconque des revendications 1 à 9,
**caractérisé en ce que** lesdites cannelures principales (31, 32) comportent des cannelures à flancs rectilignes.

11. Système de transmission de couple selon l'une quelconque des revendications 1 à 10,
**caractérisé en ce que** ledit dispositif de guidage radial de secours (50) comporte un anneau (51) de l'arbre mené (20) et au moins une face d'appui (52) de l'arbre menant (10), ladite au moins une face d'appui (52) étant séparée de l'anneau (51) dans le mode de fonctionnement nominal.

12. Boîte de transmission de puissance (70),
**caractérisée en ce que** la boîte de transmission de puissance (70) comporte un système (1) de transmission de couple selon l'une quelconque des revendications 1 à 11.

13. Véhicule (80),
**caractérisé en ce que** ledit véhicule (80) comporte un système (1) de transmission de couple selon l'une quelconque des revendications 1 à 11.

## Patentansprüche

1. Drehmomentübertragungssystem (1) mit einer Antriebswelle (10) und einer Abtriebswelle (20) , wobei die Antriebswelle (10) hohl und um eine Drehachse (AX) drehbar ist, wobei sich die Antriebswelle (10) in Längsrichtung entlang der Drehachse (AX) von unten nach oben in einer Elevationsrichtung (SBH) von einem unteren Abschnitt (11) über einen Zwischenabschnitt (12) bis zu einem oberen Abschnitt (15) erstreckt, wobei die Abtriebswelle (20) in Längsrichtung einen ersten Abschnitt (21) umfasst, der durch einen zweiten Abschnitt (22) verlängert ist, wobei der erste Abschnitt (21) innerhalb der Antriebswelle (10) angeordnet ist und der zweite Abschnitt (22) außerhalb der Antriebswelle (10) angeordnet ist, wobei das Übertragungssystem (1) ein oberes Lager (26), das mit dem oberen Abschnitt (15) zusammenwirkt, und ein unteres Lager (25), das mit dem unteren Abschnitt (11) zusammenwirkt, umfasst, wobei das Übertragungssystem (1) eine nominelle Keilwellenverbindung (30) mit Hauptkeilprofilen (31), die auf dem Zwischenabschnitt (12) vorhanden sind und die in einem nominellen Betriebsmodus, der ein Betriebsmodus ohne Ausfall ist, mit auf dem ersten Abschnitt (21) vorhandenen Hauptkeilprofilen (32) kämmen, eine Hilfskeilwellenverbindung (40) zwischen der Antriebswelle (10) und der Abtriebswelle (20) und eine Hilfs-Radialführungsvorrichtung (50) zwischen der Antriebswelle (10) und der Abtriebswelle (20) aufweist,
**dadurch gekennzeichnet, dass** die Hilfskeilwellenverbindung (40) in der Elevationsrichtung oberhalb der nominellen Verbindung (30) in Bezug auf die Drehachse (AX) angeordnet ist, wobei die Hilfsverbindung (40) im nominellen Betriebsmodus inaktiv ist,
die Hilfs-Radialführungsvorrichtung (50) zwischen der Antriebswelle (10) und der Abtriebswelle (20) in der Elevationsrichtung unterhalb der nominellen Verbindung (30) in Bezug auf die Drehachse (AX) angeordnet ist, wobei die Hilfs-Radialführungsvorrichtung (50) im nominellen Betriebsmodus inaktiv ist.

2. Drehmomentübertragungssystem nach Anspruch 1,
**dadurch gekennzeichnet, dass** der Zwischenabschnitt (12) ein Zahnrad (16) aufweist.

3. Drehmomentübertragungssystem nach Anspruch 2,
**dadurch gekennzeichnet, dass** die Hilfsverbindung (40) in Längsrichtung zwischen dem Zahnrad (16) und dem oberen Abschnitt (15) angeordnet ist.

4. Drehmomentübertragungssystem nach einem der Ansprüche 1 bis 3,
**dadurch gekennzeichnet, dass** der Zwischenabschnitt (12) einen oberen Verbindungsabschnitt (14) und einen unteren Verbindungsabschnitt (13) aufweist, wobei der obere Verbindungsabschnitt (14) mit dem unteren Verbindungsabschnitt (13) und dem oberen Abschnitt (15) fest verbunden ist, wobei der untere Verbindungsabschnitt (13) mit dem unteren Abschnitt (11) fest verbunden ist, und wobei die Notverbindung (40) mit dem oberen Verbindungsabschnitt (14) zusammenwirkt.

5. Drehmomentübertragungssystem nach Anspruch 4,
**dadurch gekennzeichnet, dass** der obere Verbindungsabschnitt (14) und der obere Abschnitt (15) ein erstes einheitliches Teil bilden, der untere Verbindungsabschnitt (13) und der untere Abschnitt (11) ein zweites einheitliches Teil bilden, und der obere Verbindungsabschnitt (14) durch eine mechanische Befestigung (17) am unteren Verbindungsabschnitt (13) befestigt ist.

6. Drehmomentübertragungssystem nach einem der Ansprüche 1 bis 5,
**dadurch gekennzeichnet, dass** die Hilfsverbindung (40) erste Hilfskeilprofile (41) umfasst, die fest mit der Antriebswelle (10) oder der Abtriebswelle (20) verbunden sind, dass die Hilfsverbindung (40) zweite Hilfskeilprofile (42) umfasst, die fest mit der Antriebswelle (10) oder der Abtriebswelle (20) verbunden sind, die nicht mit den ersten Hilfskeilprofilen (41) versehen ist, und dass im nominellen Betriebsmodus ein Umfangsspiel die ersten und die zweiten Hilfskeilprofile voneinander trennt.

7. Drehmomentübertragungssystem nach Anspruch 6,
**dadurch gekennzeichnet, dass** die ersten Hilfskeilprofile (41) eine Zahndicke haben, die kleiner ist als eine Zahndicke der zweiten Hilfskeilprofile (42), dass die ersten Hilfskeilprofile (41) fest mit der Antriebswelle (10) verbunden sind, und dass die zweiten Hilfskeilprofile (42) fest mit der Abtriebswelle (20) verbunden sind.

8. Drehmomentübertragungssystem nach einem der Ansprüche 6 bis 7,
**dadurch gekennzeichnet, dass** zwei benachbarte erste Hilfskeilprofile (41) durch einen ersten Boden (43) verbunden sind und zwei benachbarte zweite Hilfskeilprofile (42) durch einen zweiten Boden (44) verbunden sind, und dass in der nominellen Betriebsart kein erstes Hilfskeilprofil (41) ein zweites Hilfskeilprofil (42) und einen zweiten Boden (44) berührt und kein zweites Hilfskeilprofil (42) einen ersten Boden (43) berührt.

9. Drehmomentübertragungssystem nach einem der Ansprüche 6 bis 8,
**dadurch gekennzeichnet, dass** zwei benachbarte erste Hilfskeilprofile (41) durch einen ersten Boden (43) verbunden sind, zwei benachbarte zweite Hilfskeilprofile (42) durch einen zweiten Boden (44) verbunden sind, und dass in der nominellen Betriebsart: ein Umfangsspiel (45) eine Flanke (411, 412) jedes ersten Hilfskeilprofils (41) und ein benachbartes zweites Hilfskeilprofil (42) trennt, ein erster radialer Zwischenraum (46) jedes zweite Hilfskeilprofil (42) von jedem ersten Boden (43) trennt und ein zweiter radialer Zwischenraum (47) jedes erste Hilfskeilprofil (41) von jedem zweiten Boden (44) trennt.

10. Drehmomentübertragungssystem nach einem der Ansprüche 1 bis 9,
**dadurch gekennzeichnet, dass** die Hauptkeilprofile (31, 32) Keilprofile mit geraden Flanken umfassen.

11. Drehmomentübertragungssystem nach einem der Ansprüche 1 bis 10,
**dadurch gekennzeichnet, dass** die Hilfs-Radialführungsvorrichtung (50) einen Ring (51) der Abtriebswelle (20) und mindestens eine Stützfläche (52) der Antriebswelle (10) umfasst, wobei die mindestens eine Stützfläche (52) im nominellen Betriebsmodus von dem Ring (51) getrennt ist.

12. Kraftübertragungsgetriebe (70),
**dadurch gekennzeichnet, dass** das Kraftübertragungsgetriebe (70) ein Drehmomentübertragungssystem (1) nach einem der Ansprüche 1 bis 11 aufweist.

13. Fahrzeug (80),
**dadurch gekennzeichnet, dass** das Fahrzeug (80) ein Drehmomentübertragungssystem (1) nach einem der Ansprüche 1 bis 11 aufweist.

## Claims

1. Torque transmission system (1) comprising a drive shaft (10) and a driven shaft (20), said drive shaft (10) being hollow and rotatable about an axis of rotation (AX), said drive shaft (10) extending longitudinally along the axis of rotation (AX) from bottom to top in an upward direction (SBH) from a lower portion (11) to an upper portion (15) and passing through an intermediate portion (12), said driven shaft (20) comprising longitudinally a first portion (21) extended by a second portion (22), said first portion (21) being arranged within the drive shaft (10), said second portion (22) being arranged outside the drive shaft (10), said transmission system (1) comprising an upper bearing (26) which interacts with the upper portion (15) and a lower bearing (25) which interacts with the lower portion (11), said transmission system (1) comprising a nominal splined connection (30) having main splines (31) provided on the intermediate portion (12) which mesh with the main splines (32) provided on the first portion (21) in a nominal mode of operation which is a failure-free mode of operation, and comprising an emergency splined connection (40) between the drive shaft (10) and the driven shaft (20) and an emergency radial guide device (50) between the drive shaft (10) and the driven shaft (20),
**characterised in that**:
- the emergency splined connection (40) is arranged above the nominal connection (30) in said upward direction with respect to the axis of rotation (AX), the emergency connection (40) being inactive in the nominal mode of operation,
- the emergency radial guide device (50) between the drive shaft (10) and the driven shaft (20) is arranged below the nominal connection (30) in said upward direction with respect to the axis of rotation (AX), the emergency radial guide device (50) being inactive in the nominal mode of operation.

2. Torque transmission system according to claim 1,
**characterised in that** said intermediate portion (12) comprises a toothed wheel (16).

3. Torque transmission system according to claim 2,
**characterised in that** said emergency connection (40) is arranged longitudinally between the toothed wheel (16) and the upper portion (15).

4. Torque transmission system according to any of claims 1 to 3,
**characterised in that** said intermediate portion (12) comprises an upper connection portion (14) and a lower connection portion (13), said upper connection portion (14) being secured to the lower connection portion (13) and to the upper portion (15), said lower connection portion (13) being secured to the lower portion (11), and said emergency connection (40) interacting with said upper connection portion (14).

5. Torque transmission system according to claim 4,
**characterised in that** said upper connection portion (14) and the upper portion (15) form a first unitary part, said lower connection portion (13) and said lower portion (11) form a second unitary part, said upper connection portion (14) being fixed by a mechanical attachment (17) to the lower connection portion (13).

6. Torque transmission system according to any of claims 1 to 5,
**characterised in that** said emergency connection (40) comprises first emergency splines (41) which are secured to the drive shaft (10) or to the driven shaft (20), the emergency connection (40) comprising second emergency splines (42) which are secured to the drive shaft (10) or the driven shaft (20) devoid of the first emergency splines (41), with a circumferential clearance separating the first emergency splines and the second emergency splines in the nominal mode of operation.

7. Torque transmission system according to claim 6,
**characterised in that** the first emergency splines (41) have a tooth thickness smaller than a tooth thickness of the second emergency splines (42), said first emergency splines (41) being secured to the drive shaft (10) and said second emergency splines (42) being secured to the driven shaft (20).

8. Torque transmission system according to either claim 6 or claim 7,
**characterised in that**, two such adjacent first emergency splines (41) being connected by a first bottom (43) and two such adjacent second emergency splines (42) being connected by a second bottom (44), in the nominal mode of operation no first emergency spline (41) touches a second emergency spline (42) and a second bottom (44) and no second emergency spline (42) touches a first bottom (43).

9. Torque transmission system according to any of claims 6 to 8,
**characterised in that**, two such adjacent first emergency splines (41) being connected by a first bottom (43) and two such adjacent second emergency splines (42) being connected by a second bottom (44), in the nominal mode of operation: one such circumferential clearance (45) separates a flank (411, 412) of each first emergency spline (41) and an adjacent second emergency spline (42), a first radial gap (46) separates each second emergency spline (42) from each first bottom (43) and a second radial gap (47) separates each first emergency spline (41) from each second bottom (44).

10. Torque transmission system according to any of claims 1 to 9,
**characterised in that** said main splines (31, 32) comprise splines having straight flanks.

11. Torque transmission system according to any of claims 1 to 10,
**characterised in that** said emergency radial guide device (50) comprises a ring (51) of the driven shaft (20) and at least one bearing surface (52) of the drive shaft (10), said at least one bearing surface (52) being separated from the ring (51) in the nominal mode of operation.

12. Power transmission gearbox (70),
**characterised in that** the power transmission gearbox (70) comprises a torque transmission system (1) according to any of claims 1 to 11.

13. Vehicle (80),
**characterised in that** said vehicle (80) comprises a torque transmission system (1) according to any of claims 1 to 11.
